# EUROPEAN PATENT APPLICATION

(11) **EP 1 638 265 A1**
(43) Date of publication of application: **22.03.2006**
(21) Application number: 04368065.1
(22) Date of filing: 15.09.2004
(51) Int. Cl.: H04L 12/56

(54) **Process for regulating the traffic of an Adhoc network**

(71) Applicant: Institut Eurecom G.I.E., 06904 Sophia-Antipolis (FR)
(72) Inventor: Knopp, Raymond, 06370 Mouans Sartoux (FR); Nikaein, Navid, 06700 Saint Laurent du Var (FR)
(74) Representative: Schuffenecker, Thierry

(57) **Abstract**

Process for controlling the traffic of an adhoc wireless network including a plurality of nodes directly communicating with each other without the need of any access point comprising:
- establishing at least one regulator within said wireless network for the control of a Time Division Multiplex Access (TDMA) with a TDMA frame including:
   - a first field (BCH) including a synchronization signal (REG SYNC) generated by the regulator and being broadcasted and further including slot allocation control information;
   - a second field (MCH) including measurements information generated by the nodes;
   - a third field (SACH) serving for the direct communication between two nodes, said third field being arranged in a plurality of slots with each slot defining temporal resource allocation;
- computing within said regulator said MCH and deriving therefrom slot allocation control information to be inserted within said first field (BCH), thereby providing a first level of traffic control;
- computing within each particular node said BCH field and deriving therefrom transmission opportunities assigned to one particular node, said node keeping possibilities of control of sub-allocation of the transmission resources to different flows of data, thereby providing a second level of control of the traffic.

## Description

### Technical field of the invention

The invention relates to wireless telecommunications and more particularly to a process for regulating the traffic of an Ad hoc network.

### Background art

Wireless networks are based on two different kinds of topology, adhoc networks and infrastructure networks.

An Adhoc network is a wireless network having no infrastructure and wherein any terminal or node can communicate with another one without the requirement of any access point. Such networks were developped in the 70's ― particularly - for military applications and showed to be a simple and effective way for setting up wireless networks, primarily dedicated to the transport of voices messages. Today, with the huge development of mobile computing, there is an increasing need for the establishment of shorted lived networks, just for the communication needs of the moment, in other words, *ad hoc* networks.

Basic information regarding ad hoc networks can be found in the following reference: ADHOC NETWORKING, Charles E. Perkins, , Addison-Wesly, ... ISBN 0-201-30976-9.

As opposed to adhoc networks, an infrastructure network is based on an existing infrastructure, that is to say an *access point* which receives and controls all the traffic conveyed within the wireless network. The presence of an access point substantially improves the possibilities of controlling the traffic within the wireless network and, for that reason, the more recent developments (e.g. Bluetooth, WIFI 802.11) were brought to the infrastructure network model.

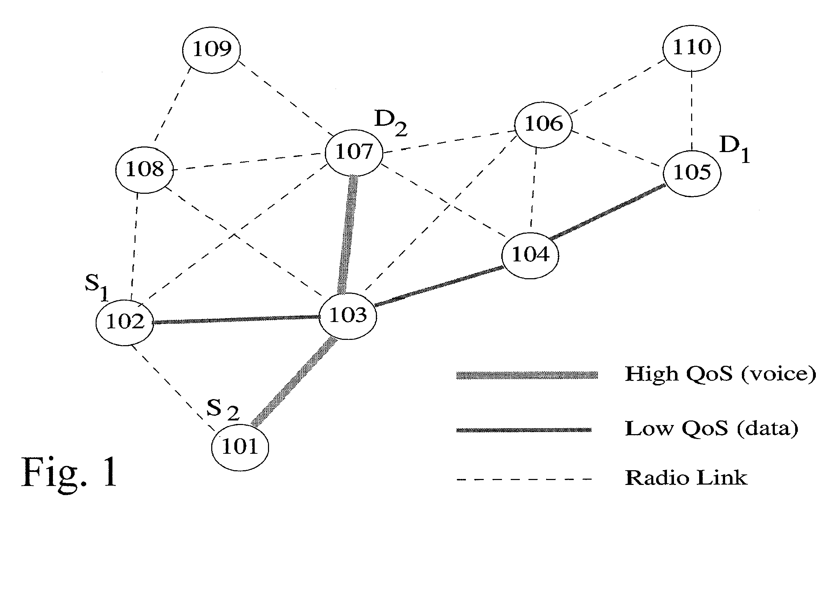

The development of recent multimedia applications - involving the transmission of different types of data (video, images, text, email or voice) having different priority requirements - resulted in the emerging importance of the concept of Quality of Service. Quality of service is taking a prominent role in future wireless networks since it is clear that different types of data will accomodate with different speed of transmission through the network. For instance, the transmission of email will accomodate low transmission rates while the transmission of voice ― for instance - will require faster transmission and lower transmission delay within the network. Figure 1 particularly illustrates an adhoc topology comprising nodes or terminals 101-110. A first connection is established between source node 102 (S1) and destination node 105 via relays 103 and 104. A second connection is further established between source node 101 (S2) and destination node 107 (D2). Assuming the first connection is a low rate (data) connection and that the second connection (voice) requiring higher throughput, it can be seen that relay node 103 has to handle two different flows of data - the former towards destination node 105 and the latter towards destination node 107 - with two different QoS requirements.

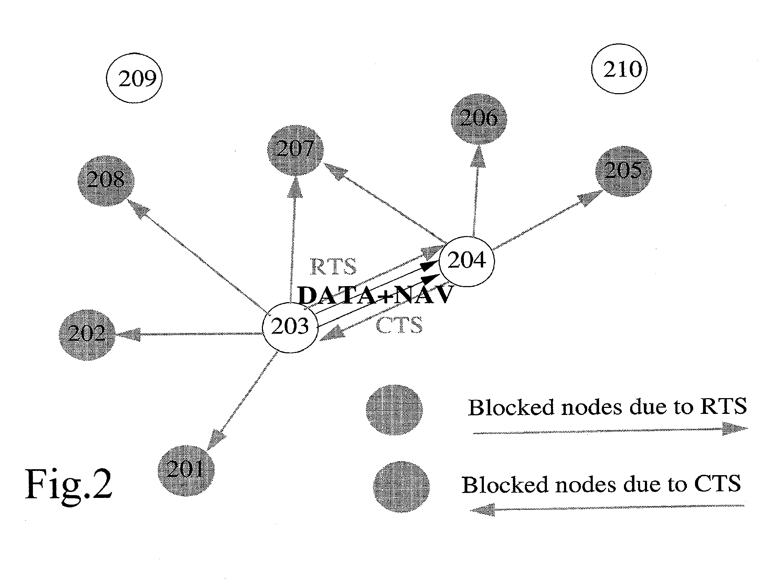

Ad hoc Networking has always showed very limited possibilities in the control of traffic and more generally in QoS. Figure 2 illustrates the mechanism traditionaly used in ad hoc networking for establishing a connection between a source node 203 and a destination node 204. Such connection involves the exchange of the *Ready To Send* (RTS) message by node 203 - entailing blocking of all neighbouring nodes 201, 202, 207 and 208. Further, the *Clear To Send* (CTS) message message which is issued by destination node 204 results in nodes 205-207 being blocked. Such mechanism clearly prohibits the possibility of garanteing any Quality of Service (QoS) since all neighboring nodes of the source 203 and destination 204 are clearly blocked.

The basic scheme for this mechanism on adhoc mode (i.e. distributed coordination function DCF) is carrier sense multiple access (CSMA) where the principle is to "listen before talking". This protocol has two variants: collision detection (CSMA/CD) and collision avoidance (CSMA/CA). CSMA/CD is used in Ethernet (IEEE 802.3) wired networks. Whenever a node detects that the signal it is transmitting is different from the one on the channel, it aborts transmission, saving useless collision time. This mechanism is not possible in wireless communications because a terminal cannot listen to the channel while transmitting data. To deal with this problem, the sender should wait for an acknowledgment (ACK) from the reciever after each transmission. Applying collision avoidance minimizes the risk of collision by using RTS and CTS scheme in addition to the previous basic scheme. The idea is based on four-way handshaking RTS/CTS/DATA/ACK to reduce the effect of the collision caused by the hidden nodes. A node with a packet to transmit transmits a short RTS, and waits for the corresponding CTS packet from the destination. When the sender receives the CTS, it sends the data packet and waits for an ACK from the destination. If the sender receives no ACK, it retransmits the packet. If it receives no CTS, the sender assumes the channel is highly loaded, and it reschedules the future retransmissions accordingly. All the nodes within the ranges of the sender and the receiver defer their transmission upon hearing the RTS and CTS respectively. Indeed, the current transmission duration is included in the header of the date packet, in RTS and in the CTS, so when other nodes hear one of these, they update their network allocation vectors (NAV) and wait them to expire before starting new transmissions (NAV is used for virtual carrier sensing).

This demonstrates the poor possibilities of traffic control and Quality of Service which are offered by ad hoc networks and that seriously limitates the development of such networks in spite of their great flexibilty.

Network designers have devoted most of their efforts for improving the QoS on the other alternative network model, i.e. the infrastructure model.

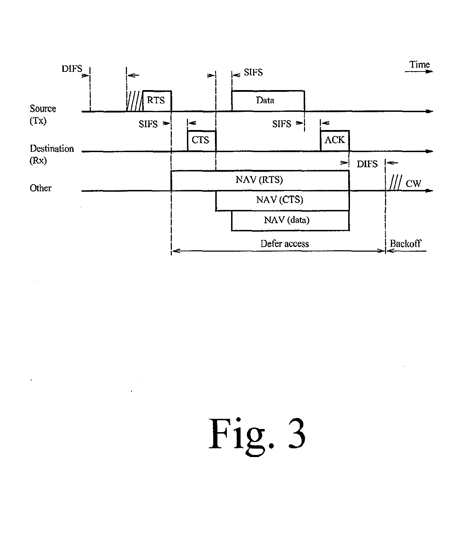

This can be shown particularly for the case of Bluetooth techniques and also the more recent 802.11e technique based on the use of an access point centralizing the traffic within the network. Regarding the latter known 802.11 e technique, figure 3 shows how Quality of Service (QoS) can be achieved by introducing different traffic categories (TC) mapped into independent backoff instances. Backoff starts decreasing, to contend to access the channel when it reaches zero, after detecting the channel idel for an AIFS (arbitration Inter-Frame Space - AIFS) period of time. AIFS depends on the corresponding TC, and it is at least equal to the legacy standard DIFS. Indeed, by allocating shorter or longer Inter-Frame Space it is rendered possible to slower or quicken one particular flow of data. The same result is provided through the use of the Network Allocated Vector defining the duration of the transmission and thus permitting discrimination within the different flows of data to be performed.

As a consequence, it can be seen that most wireless networks- particularly those comprising a high number of terminals - are based on the infrastructure network model while the ad hoc technique adapted is often reserved to the more tiny networks ― often limited to .... two mobile computers.

### Summary of the invention

It is an object of the present invention to improve the possibilities of development of ad hoc wireless networks by introducing effective control of the Quality of Service provided by such networks at the Medium-Access Control (MAC) Layer.

It is another object of the present invention to provide effective regulation of the traffic in a wireless adhoc network.

It is a further object of the present invention to provide a process for multiple-access in an adhoc network which guarantees quality of service within the network.

It is still another object of the present invention to carry out an adhoc network which is adapted to the transmission of different flows of multimedia data, each having a different priority requirements.

It is still a further object of the present invention to carry out hierarchical opportunistic scheduling in adhoc networks.

These and other objects are achieved by means of a process for controlling the traffic within a wireless network which comprises :
- establishing at least one regulator within said wireless network for the establishment and the control of a Time Division Multiplex Access (TDMA) to said wireless network based on a TDMA frame which further includes:
   - a first field (BCH) including a synchronisation signal (REG SYNC) generated by said regulator and broadcasted to every nodes for the purpose of a network synchronisation and further including slot allocation control information generated by said regulator and being broadcasted to each of said plurality of nodes;
   - a second field (MCH) including measurements information generated by each of said plurality of nodes;
   - a third field (SACH) serving for the direct communication between a subset of said plurality of nodes, said third field being arranged in a plurality of slots, each slot being assigned to one node within said plurality of nodes;
- computing within said regulator said MCH second field and deriving therefrom slot allocation control information to be inserted within said first field (BCH) , thereby controlling distribution of the slots within said TDM frame and providing a first level of traffic control;
- computing within each particular node said BCH first field and deriving therefrom transmission opportunities assigned to said particular node, said node further computing sub-allocation of the transmission resources to be used within said allocated slot between different flows of data, thereby providing a second level of control of the traffic.

Since the process is still based on an adhoc network model, excluding the presence of any access point, there is provided the advantage of such adhoc technique, is flexibility. There is achieved an easy way of establishing a wireless network in many situations (personal wireless, journalistic events etc...) where there is no infrastructure.

In addition, there is provided an effective control of the resources, thus offering effective and guaranteed Quality of Service required for multimedia applications.

In one embodiment, each node includes a plurality of queues having different levels of priorities, and that said second (MCH) field includes information representative of the Quality of Service required and more particularly of rate of filling within said queues.

In one particular embodiment, the regulator is a function active within one node which can be moved from one node to another in accordance with the physical position of the nodes within the wireless adhoc network.

Further, since it is every node which particularly decides upon the allocation of the resources within the slot, here is provided a more effective spectral efficiency. Indeed, contrary to the known approach used in access point where it is the latter which has to control how the radio resources have to be allocated, that allocation, with the invention, is provided at the level of the node. This establishes a two level control. A first level guaranteed by the Regulator which distributes the slots within the TDM frame. And a second level which is performed by the node which allocates the resources -temporal resources (symbols), frequency resources (sub-carriers), spatial resources (antennas)- to the different queues of data.

In one particular embodiment, the regulator performs slot allocation within the TDM frame derived from a set of measurements and statistics generated by each node. This ensures the possiblity to upload, in a continuous manner, all the information provided by every node at the local level.

It can be seen that the invention provides both advantages of a central regulation - which is achieved in the standard known infrastructure network model - and the local regulation which guarantees effective use of the spectral resources.

The invention also provides a wireless communication device for an adhoc wireless network including a plurality of nodes directly communicating with each other without the need of any access point. The network includes at least one regulator for controlling the establishment of a Time Division Multiplex Access (TDMA) to said wireless network based on a TDMA frame. The TDMA frame further includes:
- a first field (BCH) including a synchronisation signal (REG SYNC) generated by said regulator and broadcasted to every nodes for the purpose of a network synchronisation and further including slot allocation control information generated by said regulator and being broadcasted to each of said plurality of nodes;
- a second field (MCH) including measurements information generated by each of said plurality of nodes;
- a third field (SACH) serving for the direct communication between two of said plurality of nodes, said third field being arranged in a plurality of slots, each slot being assigned to one node within said plurality of nodes;

In accordance with the present invention, the wireless communication device includes :
- at least two different queues of different priority classes;
- means for extracting said slot allocation control information from said BCH first field and for deriving therefrom slot transmission opportunities allocated by said regulator;
- means for computing sub-allocation of the wireless transmission resources within said opportunities to the data of the said at least two different queues, thereby achieving local traffic control and Quality of Service.

In one particular embodiment, the wireless communication device includes means for generating measurements representative of the level of said at least two queues which are transmitted to said regulator in said second MCH field.

### Description of the drawings

An embodiment of the invention will now be described, by way of example only, with reference to the accompanying drawings, wherein:
Figure 1 is a general view of a wireless adhoc network used for communicating multimedia data.
Figure 2 illustrates the limited possiblities of traffic control in known ad hoc networks.
Figure 3 is a flow chart illustrating how the quality of service (QoS) is achieved in an infrastructure network model.
Figure 4 illustrates the general architecture of the ad hoc network in accordance with the present invention.
Figure 5 illustrates the structure of the TDMA arrangement established under control of the regulator 307.
Figure 6 illustrates the process executed into the regulator in steady state operation.
Figure 7 illustrates the initialization process of a new node incorporated within the wireless network of the present invention.
Figure 8 illustrates the process executed into a node in steady state operation.
Figure 9 illustrates the opportunistic scheduling of the network resources which are carried out by the nodes.

### Description of the preferred embodiment of the invention

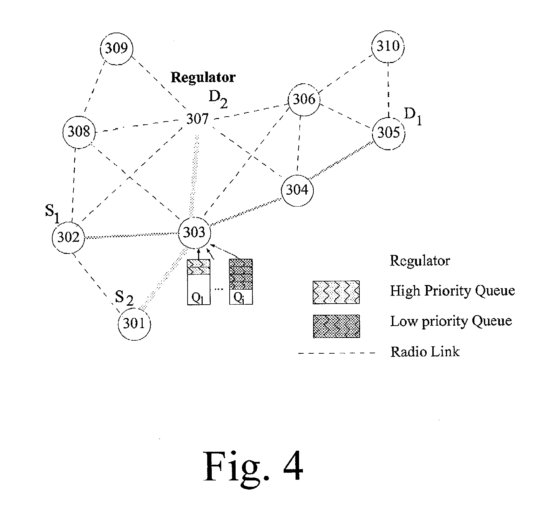

Figure 4 illustrates the principle of an ad hoc network according to the present invention achieving traffic control and Quality of Service requirements.

The network comprises a set of nodes or communicating terminals 301-310 which can take the form of any device equipped with wireless communicating. Clearly, this applies to general purpose equipments such as stand alone computers, mobile computers, Portable Document Assistants (PDA) fitted with wireless connectivity, or any specialized systems such as car equipments etc... The wireless network can be particularly fitted for the connection to the Internet network or any hybrid networks including a common Local Area Network (L.A.N.).

It can be seen in the figure that a first connection is established between a first source node 302 (S1) and a first destination node 305 (D1), through relaying nodes 303 and 304. In addition, a second connection is established between a second source node 301 (S2) and a second destination node 307 via relay node 303 which also serves for the transmission of data between first source 302 and first destination node 305.

For the sake of clarity, relay node 303 is considered as not generating any additional traffic but such occasion should be clearly considered as possible. More generally, any node within the wireless ad hoc network is likely to produce its own traffic within the network.

With respect to figure 4 again, it can be seen that the transmission of data between first source node 302 and first destination 305 is considered to be a low priority data flow. Conversely, the transmission of data between second source 301 and second destination 307 is assumed to correspond to a higher priority data flow.

In order to handle data flows of different priorities - and more generally of different QoS requirements - each node is fitted with different queues corresponding to different levels of priority and QoS. Queue Q1 in figure 4 corresponds to the upper priority data flow between source 301 and 307; while queue Q'1 corresponds to the lower priority data flow between source 302 and 305.

In addition to the different nodes, the ad hoc networks according to the present invention further comprises at least one regulation function, embodied in one regulator or, also, any preexisting node within the network. In the example of figure 4, only one regulator is illustrated and is embodied within node 307.

In contrary to the known technique used for infrastructure wireless network, the regulator 307 does not serve as a access point for said network. This is an essential difference between regulator 307 and the concept of coordinator existing in the known Bluetooth or 802.11x techniques.

Therefore, ad hoc network is still applicable to the wireless network and the regulator is only responsible for establishing a Time Division Multiplex Access (TDMA) within said networks, and controlling distribution of the different slots within said TDMA to the different nodes within said network.

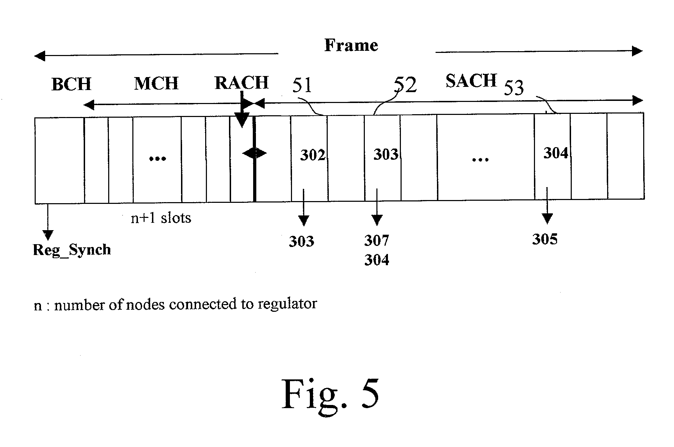

Figure 5 more particularly illustrates the structure of the Time Division Multiplex Access (TDMA) frame which includes a first field (BCH) corresponding to a broadcast channel being conveyed to every nodes. BCH channel further includes a synchronisation signal (REG_SYNC) generated by the regulator for the purpose of network synchronisation. In addition, the TDMA frame includes control information for the purpose of slot allocation definition.

A second field - known as a Measurements Channel (MCH) field - then follows and serves for the transmission to the regulator of measurements and statistical values generated by the different nodes. Furthermore, the signals on the MCH can be used by the different nodes in order to derive wideband signal quality measures for the point-to-point links between neighbouring nodes. These measures can be used to feed the second-level opportunistic scheduling algorithms in order to efficiently allocate the available physical resources (temporal, frequency, spatial). The MCH has one extra slot for new terminal(s) to get connected to the Regulator and obtain a measurement channel. New terminals are contending to get known by the regulator using random access scheme, which is why the channel is called RACH (random access channel).

The TDMA frame further includes a third field - SACH field - which is dedicated to the direct transmission between the different nodes of the wireless networks. The SACH field is arranged in a set of different slots which will be allocated - as described hereinafter - to the different nodes.

It is essential to understand that the slot allocation within the TDMA frame is controlled by the regulator. Such control is carried out in response to measurements values - expressing needs for quality of service - reported by the nodes via MCH channel.

As it can be seen in figure 5, one slot 51 within the SACH field is assigned to node 302, while slots 52 and 53 are respectively assigned to nodes 303 and 304.

As a consequence, the ad hoc network of the present invention primarily works on a TDMA arrangement, based on slots which are assigned or allocated to the different nodes. However, and this is a key feature of the invention, the slots are not assigned to one connection - e.g. connection between node 303 and node 307 for instance. It can be seen that slot 53 serves for the transmission of data to nodes 304 and 307 (corresponding to the first and second connection of figure 4) . Slots 51 and 53 are respectively used for the transmission of data to destination nodes 303 and 305.

Therefore, the ad hoc network architecture of the present invention leaves open the sub-allocation of the ressources within one slot - for instance 53 - to the corresponding node which receives that slot allocation. That provides the possibility of finer control on the traffic within the network and such finer control is left at the level of the local node.

It can be seen that the process of the invention achieves effective control of the traffic both globally from regulator point of view and locally from terminal point of view.

Central regulation is achieved by the regulator which distributes the time slots within the TDMA frame, based on the information, measurements and statistics received from the different nodes within the network. This ensures a guarantee quality of service since the Regulator can assigned to every node a predetermined part of the bandwidth within the networK.

In addition to Central regulation, the invention further provides local control of the traffic. This local control is handled at the level of every terminal or node which receives, at the local level, all the information (states of the queues of data, quality of the channels etc...) needed for allocating the different ressources within the particular slot(s) which was assigned by the Regulator.

Double level of control is thus achieved, and this provides an advantageous control of the traffic. Security is further enhanced since the regulator, in the proposed invention, does not receive any information regarding the different connexions established between the nodes within the wireless network. This substantially increases the security of the network and this further shows how significantly the invention dffers from the known approach, based on an existing access point.

Because of the flexibility offered by the adhoc topology, the invention permits a very effective and flexible wireless network to be established. This opens the possibilty of new applications, such as personal wireless network, public security networks, hybrid networks combining infrastructre and adhoc topologies, wireless networks for sensors, wireless applications in vehicles... , and more generally any application wherein the short setup of a wireless network does not permit the presence of an access point in a infrastructure model network.

It should be noticed that the concept of regulator which is introduced by the present invention in the adhoc network substantially differs from the concept of coordinator or access point known in some networks belonging to the infrastructure model, e.g. Bluetooth or 802.11x techniques. Indeed, in those examples, the coordinator receives all the traffic exchanged within the network, in contrary to the regulator of the invention which only establishes a TDM frame within the network without receiving the traffic and further without even being aware of the particular connexions established between the different nodes.

This is a clear difference with the techniques avalaible in the infrastructure network models and such different provides a significant set of advantages.

Firstly, the security is enhanced since the regulator is not be informed of the different connections being established. The regulator only receives through the MCH channel measurements and statistical representative of the needs of the different nodes, irrespective with the particular connexions which such nodes have established with other nodes.

Secondly, the regulator establishes within the invention leaves open the possibility of a second level of control, at the local level, for every node. This is absoluty not possible in the known infrastructure techniques. Therefore, nodes can use the information known at the local level (Wideband RF measurements, status of the different queues etc...) for allocating the resources to the different connections and types of data. In the infrastructure network model, all the decisions have to be taken at the central level of the coordinator, and this clearly prevents fine optimization of the resources.

Thirdly, the process of controlling the traffic is made much easier at the level of the regulator since there is only needed to capture the different measurements and statistical values transmitted by the different nodes belonging to the wireless network, without requiring the processing of any formal request generated by the different nodes.

Different embodiments can be considered for such measurements.

In one embodiment, the measurements which are generated by one node is derived from the level of the different queues and their priority classes comprised within that node. That provides an easy way for reporting information to the regulator and being a close representation of the need for throughput for that node. In one particular embodiment, the measurements comprises a numerical value computed from the level of filling of the different queues. In a second embodiment, measurements could, in addition, include spatial information indicating the directivity of traffic. Such measurements would allow the regulator to allocate slots to more than one terminal concurrently if their destinations are far apart and thus do not interfere with each other. This is would allow for efficient spatial reuse of the radio spectrum Clearly different practical approaches are feasible and such approaches are not part of the present invention. They will not be further developped. It is sufficient to say that the skilled man will have to elaborate a mechanism for computing one or more measurements value which are representative of the needs of the particular nodes.

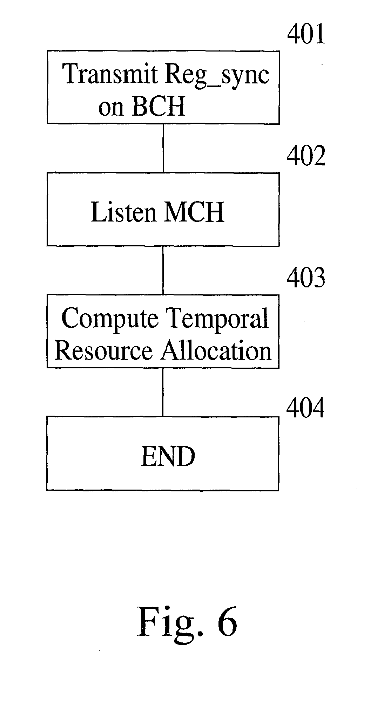

With respect to figure 6, there will now be described the process executed within the regulator 307.

In a step 401, the regulator transmits a REG SYNC synchronization signal which corresponds to the beginning of the TDMA frame, and which is broadcasted to the different nodes within the network. Such synchronisation signal is known in some techniques used in the infrastructure network model and will therefore not be further elaborated since it is not part of the present invention. It is to be noted, however, that such REG SYNC signal is generated by an unit ― the regulator ― which does not see all the traffic within the network and that is a significant difference with the known techniques. Further, in one preferred embodiment, the format (encoding, type of modulation) used for the transmission of the REG SYNC signal is chosen specifically in order to ensure longer wireless coverage than for the normal data.

The transmission of the REG SYNC synchronisation signal is achieved periodically. After each REG SYNC , the process proceeds with a step 402 where the regulator listens to the reception of the different measurements parameters and statistical values issued by the different nodes composing the ad hoc wireless network. Different options are open for such MCH channel.

In a step 403, the regulator then computes the temporal ressource allocations to the different nodes. Such computation is based on the measurements parameters and value reported by the nodes within field MCH. Clearly, many courses of action are possible for that computation, and the particular policy which can be used is not part of the present invention. In one embodiment, the measurements parameters reported are simply considered as Quality of Service (QoS) requirements and the regulator thus compares such requirements in order to derive the slot allocations within the TDMA frame. Great flexibiliy is allowed since it is possible to continuously adapt the temporal ressource allocation to the particular needs of the different nodes which are reported through the MCH channel.

The process then completes in a step 404 until the next TDMA frame.

It will now be described the processes being executed by the nodes within the ad hoc wireless network in accordance with the present invention.

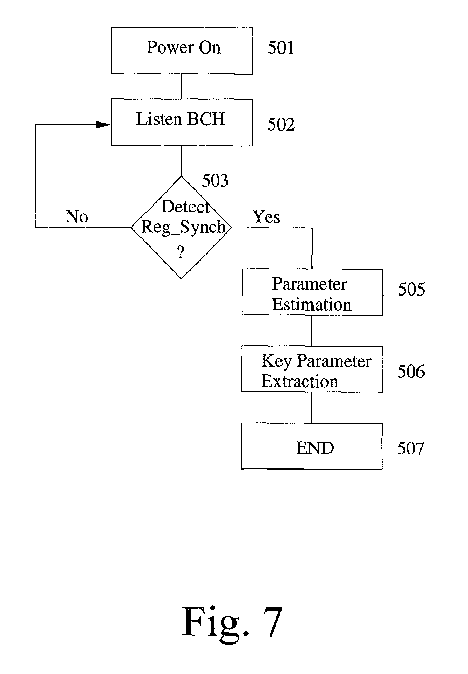

With respect to figure 7 , there is shown the process for initial configuration of a new node being power-on within the network.

Such node can be, for instance, a mobile computer which is powered-on in a step 501.

In a step 502, the process then proceeds with the listening of a BCH field being generated by a possible regulator.

In a step 503, a test is performed in order to determine whether the REG SYNC synchronisation signal is being detected and, if so, the process proceeds with a step 505.

If the test of step 503 fails, then the process proceeds back to step 502 for further listening of the BCH field. It should be noticed that different frequencies may be involved in the listening operation in order to ensure detection of the regulator, if any. In one particular embodiment, the node is fitted with a regulator function which is disactivated by default and after expiration of a predetermined period of failure of step 503, the regulator function within the powered-on node is activated , thus allowing automatic establishment of the ad hoc wireless network.

In a step 505, the powered-on node performs the parameter estimation of the frequency carrier. Such operation includes determination of start of the frame and also frequency adjustment. Such are well known to the skilled man and will not be further elaborated. Once the start of frame is determined, the receiver can be launched.

Then, in a step 506, the process proceeds with the extraction of the key parameters present within the BCH field. Such parameters precisely define the size of the frame, the number of slots within the frame, information regarding to the modulation and the definition of the temporal ressources allocations made by the centralized regulator.

The intialization procedure then completes in a step 507 and the powered-on node is now ready for steady state operation.

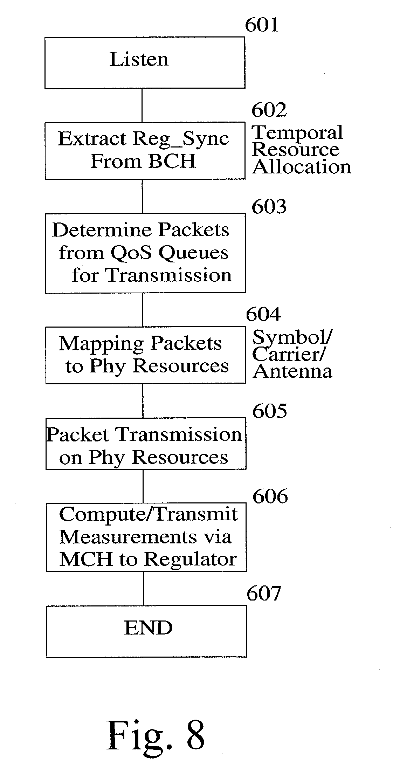

With respect to figure 8, there will now be described the steady state operation for each node comprised within the ad hoc network of the present invention.

The process starts with a step 601 which corresponds to the listening of the Broadcast channel (BCH) generated by the regulator.

In a step 602, the node then extracts the REG SYNC signal allowing network synchronisation and thus derives from the BCH information the temporal ressources allocation and particularly the slots assignment.

In a step 603, the node determines the next packets of data loaded within its different queues (such as Q1 and Q'1 of node 303 of figure 4) and which will have to be transmitted at the next transmission opportunity.

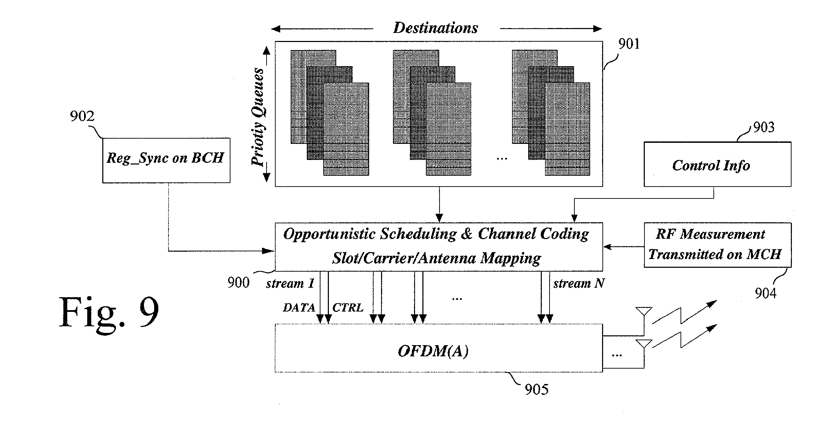

In a step 604, the node performs the mapping of the packets identified in step 603 on the different physical resources. Such physical resources include symbol, carrier, and antennas. Such process will be more particularly described in reference to figure 9.

In a step 605, the node performs the transmission of the packets through the communication medium in accordance with the mapping carried out in step 604.

In a step 606, the node then computes measurements parameters and statistical values which are then forwarded to the regulator via the MCH channel. Different embodiments can be considered in accordance with the particular statistical policy which is contemplated. Clearly, the states of the queues provide significant measurements information for that purpose; In addition, the quality of the channels measured at the local level by the node is also an interesting criterium which can be used for deriving the measurements forwarded to the regulator. Spatial directivity of the traffic can also be forwarded to the regulator.

The process then proceeds with a step 607.

It can be seen that although it is the regulator which defines the temporal resources allocation, the node has still the possibility to determine the mapping of the different data packets (extracted from the queues) on the different physical resources including symbols, carriers, and antennas based on its own queue occupations and measured wideband channel qualities with respect to its destinations. There is therefore provided, in an ad hoc network, the possibility of hierarchical opportunistic scheduling.

This is a very important aspect of the invention which is more particularly illustrated in figure 9 showing the mapping process achieving opportunistic scheduling of the different packets within the queues in competition.

A block 900 achieves the opportunistic scheduling and the channel coding (slot/carrier/antennas) mapping from different information.

Firstly, information derived from the different queues 901 assigned to the different possible destinations and also to the different priorities.

Secondly, information derived from the REG SYNC synchronization signal 902 received from the regulator and the BCH field defining the number of slots which are allocated to the considered node.

Control information 903 provide any information such as retransmission protocols, segmentation information, renumbering etc..., any information which is likely to affect mapping the packets on to the physical resources.

Wideband RF measurements are known to represent valuable information for controlling the mapping process. Indeed, by listening to the MCH field, the local node is made aware of the channel characteristics and that permits finer control on the mapping process.

After the encoding of the data - in accordance with an appropriate error correcting code - the data are entered within the modulator(s) 905 and possibly the antenna(s).

All the information mentioned above are examples of the process which can be used for mapping the different packets of data on to the different physical resources.

## Claims

1. Process for controlling the traffic of an adhoc wireless network including a plurality of nodes directly communicating with each other without the need of any access point, said process comprising the steps of:
- establishing at least one regulator within said wireless network for the establishment and the control of a Time Division Multiplex Access (TDMA) to said wireless network based on a TDMA frame which further includes:
- a first field (BCH) including a synchronization signal (REG SYNC) generated by said regulator and broadcasted to every nodes for the purpose of a network synchronization and further including slot allocation control information generated by said regulator and being broadcasted to each of said plurality of nodes;
- a second field (MCH) including measurements information generated by each of said plurality of nodes;
- a third field (SACH) serving for the direct communication between one node and a subset of said plurality of nodes, said third field being arranged in a plurality of slots, each slot being assigned to one node within said plurality of nodes;
- computing within said regulator said MCH second field and deriving therefrom slot allocation control information to be inserted within said first field (BCH) , thereby controlling distribution of the slots within said TDM frame and providing a first level of traffic control;
- computing within each particular node said BCH first field and deriving therefrom transmission opportunities assigned to said particular node, said node further computing sub-allocation of the transmission resources to be used within said allocated slot between different flows of data, thereby providing a second level of control of the traffic.

2. Process according to claim 1 **characterized in that** each node includes a plurality of queues having different levels of priorities, and that said second (MCH) field includes information representative of the level of filling within said queues.

3. Process according to claim 2 **characterized in that** said measurements information generated by each node within said plurality of node is representative of the quality of service required at the local level.

4. Process according to claim 2 **characterized in that** each of said plurality of nodes performs the mapping onto the allocated slots defined by the TDM frame, of the data to be transmitted.

5. Process according to claim 1 **characterized in that** said at least one regulator is a function which can be moved from one node to another in accordance with the physical position of the nodes within the wireless adhoc network.

6. Process for controlling the traffic of an adhoc wireless network including a plurality of nodes directly communicating with each other without the need of any access point, said process comprising the steps of:
- establishing at least one regulator for controlling the arrangement of a Time Division Multiplex Access (TDMA) within said network, said TDMA being based on a frame starting by a REG SYNC synchronization signal and organized in a number of slots of predetermined lengths, each slot being assigned to one node for the transmission of one more more packets extracted from different prioritized queues;
- transmitting within said TDMA frame measurements and statistical information to said regulator generated by said plurality of nodes;
- deriving within said regulator temporal resources allocation in response to said measurements, thereby providing a first centralized control of the traffic by the regulator;
- computing within said node definition of the sub-allocation of the physical resources to the different queues, thereby providing a second local control of the traffic by the node.

7. Process according to claim 6 **characterized in that** said measurements are measurements of different queues within the same node assigned to different Quality of Service classes.

8. Wireless communication device for an adhoc wireless network including a plurality of nodes directly communicating with each other without the need of any access point, said network including at least one regulator for controlling the establishment of a Time Division Multiplex Access (TDMA) to said wireless network based on a TDMA frame further including:
- a first field (BCH) including a synchronization signal (REG SYNC) generated by said regulator and broadcasted to every nodes for the purpose of a network synchronization and further including slot allocation control information generated by said regulator and being broadcasted to each of said plurality of nodes;
- a second field (MCH) including measurements information generated by each of said plurality of nodes;
- a third field (SACH) serving for the direct communication between one node and a subset of said plurality of nodes, said third field being arranged in a plurality of slots, each slot being assigned to one node within said plurality of nodes;
said wireless communication device including:
- at least two different queues of different priority requirements;
- means for extracting said slot allocation control information from said BCH first field and for deriving therefrom slot transmission opportunities allocated by said regulator;
- means for computing sub-allocation of the wireless transmission resources within said opportunities to the data of the said at least two different queues, thereby achieving local traffic control and Quality of Service .

9. Wireless communication device according to claim 8 **characterized in that** it further includes means for generating measurements representative of the level of said at least two queues which are transmitted to said regulator in said second MCH field.

10. Wireless communication device according to claim 9 **characterized in that** said device includes means for activating - when appropriate - a regulator for the purpose of controlling the establishment of said TDMA within said wireless network.

11. Wireless network adapter for computers **characterized in that** it includes program code elements for carrying out a process as claimed in anyone of claims 1 to 7.

12. Computer program product having program code elements for carrying out a process as claimed in any of claims 1 to 7.
